# EUROPEAN PATENT SPECIFICATION

(11) **EP 1 338 218 B1**
(45) Date of publication and mention of the grant of the patent: **27.04.2005**
(21) Application number: 02425095.3
(22) Date of filing: 22.02.2002
(51) Int. Cl.: A47B 13/02, F16B 12/52, F16B 12/50

(54) **Set of metal elements for the construction of metal furniture structures**
Satz von Metallelementen für den Aufbau von Metallmöbelstrukturen
Ensemble d'éléments métalliques pour la construction de structures de meubles métalliques

(43) Date of publication of application: 27.08.2003
(73) Proprietor: Metaltecnica Produzioni S.r.l., 47814 Bellaria (Rimini) (IT)
(72) Inventor: Baietta, Vincenzo, 47814 Bellaria (Rimini) (IT); Baietta, Michele, 47814 Bellaria (Rimini) (IT)
(74) Representative: Lanzoni, Luciano

(56) References cited:
- FR-A- 2 310 109
- US-A- 2 911 274
- US-A- 3 590 753
- US-A- 4 139 316
- US-A- 4 846 079

## Description

The present invention relates to a set of metal elements for the construction of metal furniture structures, of the type comprising vertical tubular uprights to support at least one horizontal surface and to connect side crossbeams.

Numerous metal furniture structures of the type indicated above are known, such as tables, wardrobes and the like, in which all or most of the component parts are joined together by welding.

Welding times, already long to start with, also always involve the perfect positioning of the various parts to be welded, making assembly even longer. This is particularly the case when film-coated steel is used, for esthetic reasons and/or market requirements, since it is first of all necessary to remove the film at the welding points. The construction of welded metal structures does not allow any versatility as they would be very difficult to modify, except in a workshop. They are also always shipped pre-assembled, thus requiring considerable storage and transport space.

Finally, some structures envisage the use of wooden or particle board panels as the filling for example of a horizontal surface of tables or the like, leaving the underside of the panel exposed. This is not acceptable, especially for example for the food counters of butchers' shops.

It is also known from document US4139316 a device for connecting two inclined tubes to a leg or other tubular piece in tables or similar articles. The device present a corner piece provided with prongs. The ends of two inclined square tubes extending above the prongs of the corner piece are obliquely cut such that their one side entirely conceals the corresponding side of the prongs and extends up to the seat and each forms an extension of the outer defining edges of the seat extending in the longitudinal direction of the leg or tubular piece in order, together therewith, to be held in abutment against the leg or tubular piece, the seat being designed to be urged laterally together with its extensions formed by the square tubes, against the leg or tubular piece substantially only along the defining edges and the extensions.

The aim of the present invention is to overcome the disadvantages indicated above, providing a set of metal elements for the construction of metal furniture structures, which first of all allow quick and easy assembly and dismantling by anyone, since assembly of the basic components does not envisage any welding operations.

The set of elements in question also envisages the use of particular joints, easily coupled, without welding, to the uprights of the structure, and particular crossbeams, which can in turn be coupled, without welding, to the joints, these being easy to produce in a workshop, at low cost, but efficient and stable. All the components are made from ordinary shaped and bent sheet metal, joints included, but are extremely efficient.

Finally, the set of elements in question can be transported and stored in very limited space.

These aims and others, which will become apparent from the description which follows, are achieved, according to the present invention, with a set of metal elements for the construction of metal furniture structures according to what is described in the claims.

The invention is described in detail as follows with the aid of the drawings, which illustrate an embodiment provided merely by way of non-restrictive example:
- Figure 1 shows a perspective view of the set of elements in question, with some parts cut away in order to better illustrate others, in a first embodiment for example of a piece of furniture (broken line) or in a second embodiment of a table (continuous line);
- Figure 2 shows a perspective view of the opposite side, with respect to Figure 1, with some parts cut away in order to better illustrate others, of a part of the set of elements in question, also in this case in a first embodiment for example of a piece of furniture (a part in dashed lines and a part in broken lines) or in a second embodiment of a table (continuous line);
- Figure 3 shows an exploded view of a joint, which can be coupled to an upright, partially cut away, which are part of the set of elements in question;
- Figure 4 shows a side view of the inner part of a crossbeam which is part of the set of elements in question;
- Figure 5 shows a cross-section of according to the section line V-V in Figure 4;
- Figure 6 shows a part of the above joint, with its characteristic component parts separate;
- Figure 7 shows a part of the above joint, with its characteristic component parts joined together;
- Figure 8 shows the set of elements in question appropriate to form a table;
- Figure 9 shows the set of elements of the aforesaid table arranged for storage inside each other;
- Figure 10 shows the set of elements of the aforesaid table stored inside each other.

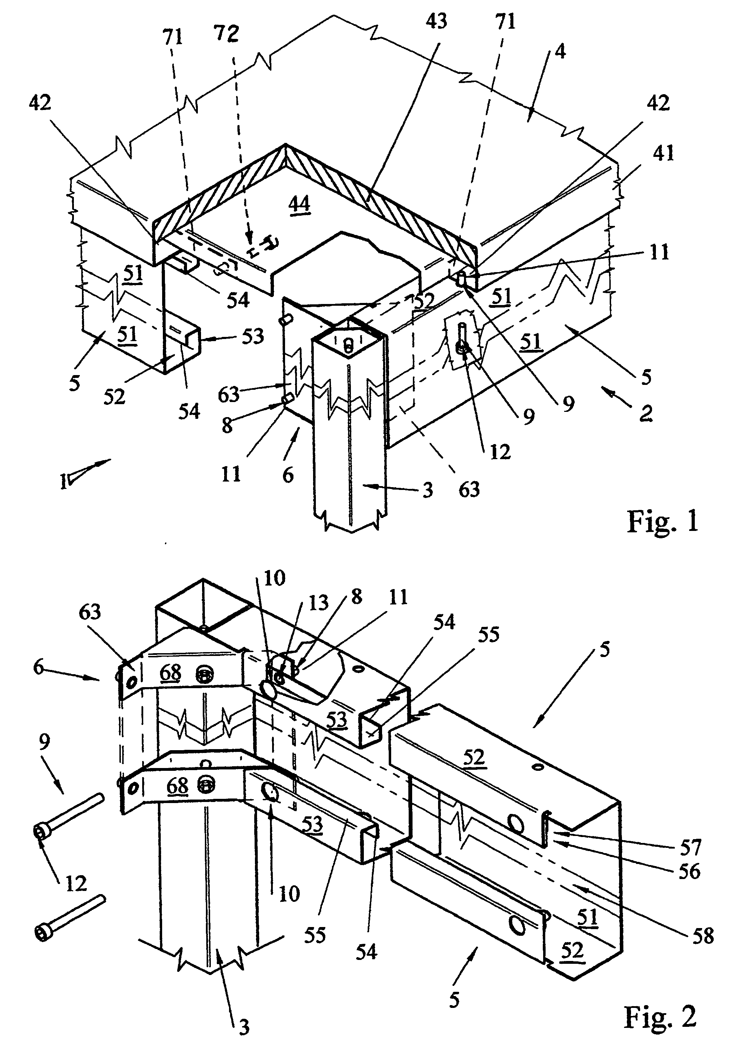

With reference to Figures 1 and 2, the numeral 1 denotes in its entirety a metal structure 1 comprising vertical tubular uprights 3 which support at least one horizontal surface 4 and connect side crossbeams 5. All the components of this structure are advantageously made from shaped and bent sheet metal.

It also comprises at least one joint 6 for each upright 3, shaped in such a way as to geometrically couple first with an upright and subsequently with at least one corresponding and matching profile 58 cut into at least one end of one of said crossbeams 5, so that first the joint 6 and the upright 3 and then the joint 6 and the crossbeam 5 are correctly joined and positioned preliminarily with respect to each other.

The invention then foresees first means 7 of firm coupling between the joint 6 and the upright 3, second means 8 of firm coupling between the joint 6 and each crossbeam 5 joined to it and finally third means 9 of firm coupling between each crossbeam 5 and the horizontal surface 4, which are all easily accessible, but concealed from the exterior.

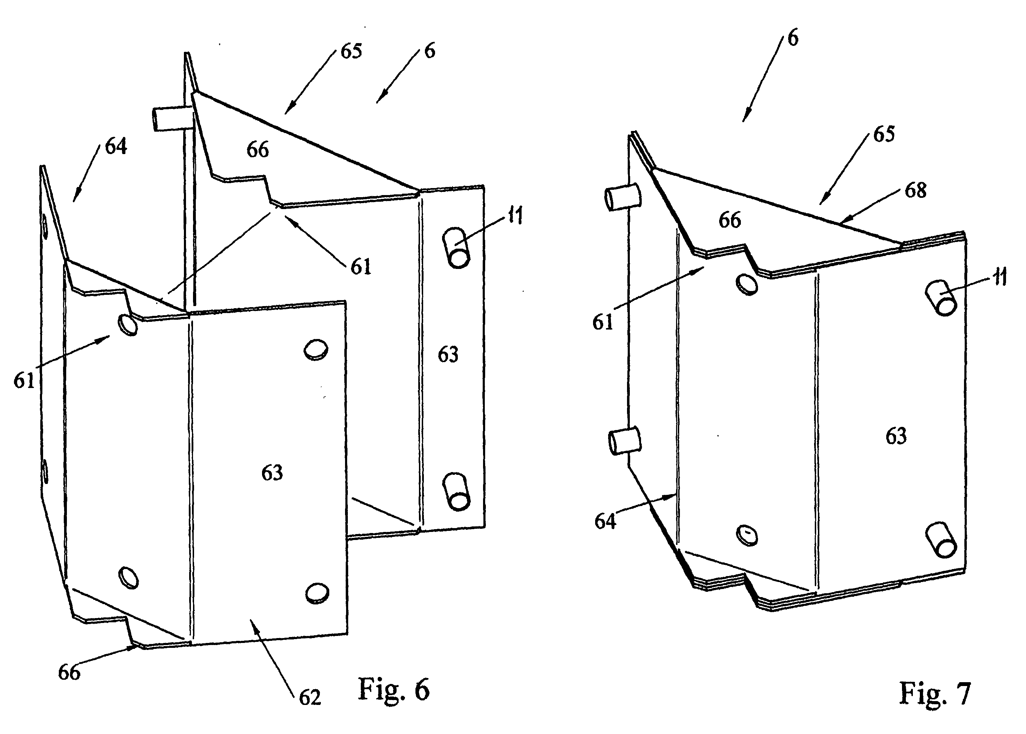

In general, the joint 6 comprises at least two wings 63 angularly spaced one from the other, but normally at right angles to each other, each of which can be engaged by the second means 8 of coupling to the crossbeams 5. In more detail, as visible in Figures 6 and 7, the joint 6 preferably comprises at least two plates 64 and 65 one on top of the other and firmly joined together, one internal 64 and one external 65 substantially a stiffener, both shaped and bent in such a way as to present a first part 61 which at least partially matches the section of the upright 3 and a second part 62 defining at least two wings 63 angularly spaced one from the other, each of which can be engaged by the second coupling means 8 with the crossbeams 5.

However, in theory, the joint 6 could also comprise a single plate 64 shaped and bent as can be seen in the left part of Figure 6.

It is nevertheless advantageous that said first part 61 comprise horizontal shaped flaps 66 of sheared metal sheet, projecting from the upper and lower end of a vertical plane 67 which connects said wings 63.

Particularly if the uprights 3 have a polygonal cross-section, the aforesaid joint also comprises a shaped element 67 positioned inside the upright 3 and bent in such a way as to remain firmly in position.

In this case, at least the first coupling means 7 are positioned at a vertical edge of the upright 3 and exercise a clamping action between the shaped element 67 and the remaining part of the joint 6 that comprises said wings 63.

Other important elements of the set in question are the crossbeams 5. Each of these comprises a vertical band 51 equipped, at the top and bottom, with opposed horizontal bands 52, the free ends of which have corresponding first vertical tongues 53, which engage the second coupling means 8.

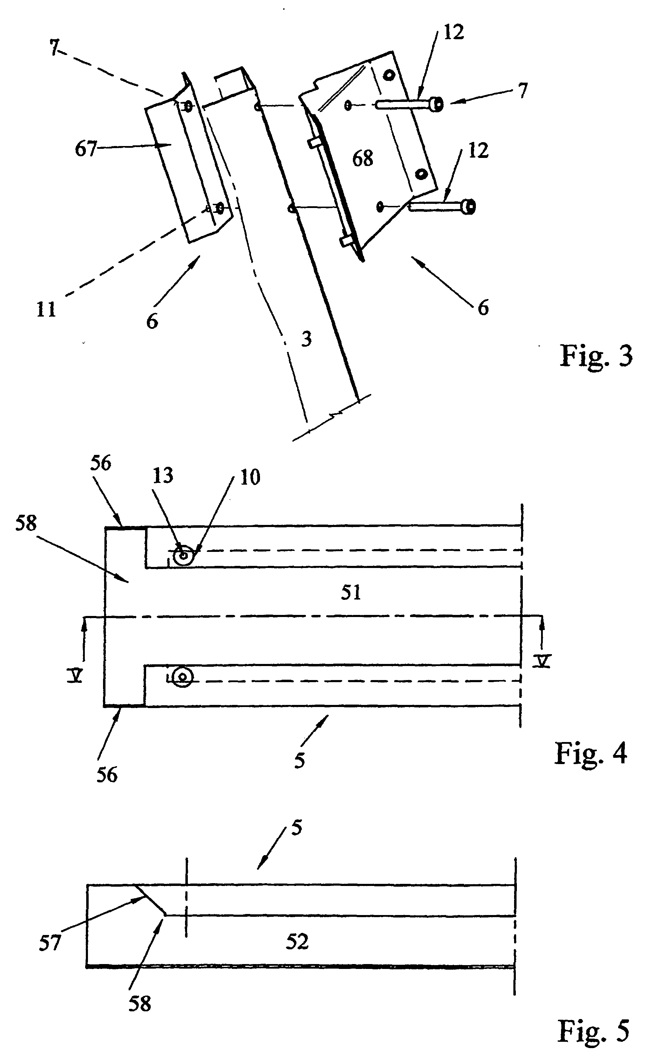

Preferably however, the first vertical tongues 53, which are substantially stiffeners, extend towards the interior of the crossbeam 5 by means of respective horizontal sections 55 and connect second corresponding vertical tongues 54, parallel to and internal with respect to the first ones, where they engage second coupling means 8. In this case, as clearly visible in Figures 2 and 4, free access to the coupling means 8 is guaranteed by corresponding holes 10, in the corresponding first vertical tongues 53, at each end of the crossbeam 5 to be coupled to the corresponding upright 3. Since each joint 6 envisages a body 68 comprising a surface 69 at an angle to and between said wings 63, each crossbeam 5 is correspondingly equipped, at its ends, with at least one pair of recesses 56 cut in the vertical tongues 53, in order to allow free and precise positioning of the body 68 of the joint 6, if the crossbeam engages the coupling means 8 at the vertical tongues 53.

If, on the other hand, the crossbeam 5 engages the coupling means 8 at the second vertical tongues 54, then its ends are also equipped with a pair of sloping shaped portions 57, cut in the horizontal sections 55 (figs 2 and 5).

When the crossbeams 5 have bands 51 designed to form the perimeter sides of a piece of furniture, they will have a corresponding height, as visible for example in Figures 1 and 2 (broken line) and the joints can have wings 63 of a corresponding size, as visible in Figure 1 (broken line) or as visible in Figure 2 (dashed line), or divided into two parts, as visible in Figure 2 (continuous line), one at the top and the other at the base of the side of the piece of furniture.

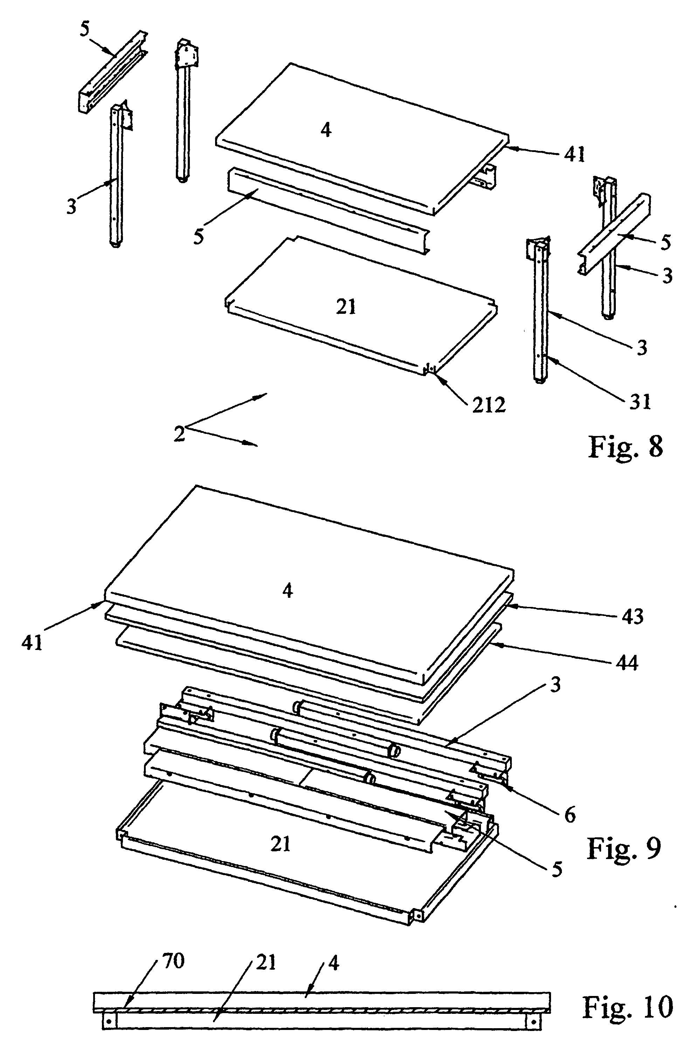

In the particular case, on the other hand, in which the metal structure 1 forms a table 2, as visible for example in Figures 1 or 2 (continuous line) or in Figures 8 and 9, the crossbeams 5 have a limited height band 51 and the wings 63 of the joint 6 can have a corresponding height, as visible in Figure 1 (continuous line), or as visible in Figure 2 (dashed line), or be divided into two parts, as visible in Figure 2 (continuous line).

In this last example, the table 2 usually has a horizontal surface 4 with peripheral downward-facing vertical walls 41 and at least one horizontal base band 42, there being at least one underlying wooden panel 43, as a filler and stiffener for the surface 4, inside said surface 4. In this case, the third coupling means 9 engage the surface 4 with the uprights 3, which act as the legs of the table 2, at the horizontal band 42, and an element 44 which protects the lower surface of the wooden panel 43 is also engaged. In this way the surface of the panel is never exposed.

The protective element 44 could also be easily attached, without welding, to the surface 4, if the latter has a short vertical peripheral tongue 71, underneath, to which the protective element can be attached with coupling means 72 and without welding (see Figure 1).

The table 2 could also comprise at least one shelf 21 beneath the horizontal surface 4, having respective peripheral vertical walls 211, with "L"-shaped corners, for the firm coupling with the uprights 3, and with holes 212 for screw-coupling with the corresponding holes 31 cut in each upright 3.

In this last case, it is extremely advantageous to calculate the dimensions of all the component elements of the table 2, of the vertical walls 41 of the horizontal surface 4 and the vertical walls 211 of the shelf 21 so that they are sufficient to allow the storage of at least the wooden panel 43 and the protective element 44 inside the horizontal top 4 and the storage of at least the uprights 3 and relative mounted joints 6, and the crossbeams inside the shelf 21.

Finally, during storage or transport it is advisable to insert a sheet 70 of polystyrene for example between the surface 4 filled as above and the protective element 44 filled as above, to protect all the parts (Figure 10). Finally, it should also be pointed out that said first, second and third coupling means 7, 8 and 9 advantageously simply consist of at least one threaded bushing 11 on one side and corresponding screw means 12, which can be engaged in at least one corresponding hole 13, on the other side.

The invention thus described can be subject to numerous modifications and variations without thereby departing from the scope of the inventive concept. Moreover, all the details of the invention may be substituted by technically equivalent elements.

In practice, all the materials used, and the dimensions, can be substitutes according to requirements.

## Claims

1. A set of metal elements for the construction of metal furniture structures, of the type comprising vertical tubular uprights (3) to support at least one horizontal surface (4) and to connect side crossbeams (5), wherein it comprises at least one joint (6) for each upright (3), shaped in order to geometrically couple first with the upright and then with at least one corresponding and matching profile (58) cut in at least one end of one of the crossbeams (5), so that first the joint (6) and the upright (3) and then the joint (6) and the crossbeam (5) are correctly joined and positioned preliminarily with respect to each other, there being at least first means (7) of firm coupling between the joint (6) and the upright (3), second means (8) of firm coupling between the joint (6) and each crossbeam (5) associated with it;
**characterised in that** the joint (6) comprises at least one piece of sheet metal (64) shaped and bent in order to present a first part (61) that at least partially matches the section of its upright (3); third means (9) of firm coupling between each crossbeam (5) and the horizontal surface (4) being provided, all these coupling means (7, 8, 9) being easily accessible, but concealed from the outside.

2. The set of metal elements according to claim 1, **characterised in that** the joint (6) comprises at least two wings (63) angularly spaced one from the other, each of which can be engaged by the second coupling means (8) with the crossbeams (5).

3. The set of metal elements according to claim 1, **characterised in that** at least the uprights (3), the horizontal surface (4) and each crossbeam (5) are made from shaped and bent sheet metal parts.

4. The set of metal elements according to claim 1, **characterised in that** the joint (6) comprises at least two overlapping pieces of sheet metal (64 and 65) firmly coupled together, one internal (64) and one external (65) substantially a stiffener, both shaped and bent in such a way as to present a first part (61) which at least partially matches the section of its upright (3) and a second part (62) defining at least two wings (63) angularly spaced one from the other, each of which can be engaged by the second coupling means (8) with the crossbeams (5).

5. The set of metal elements according to claim 2 or 4 , **characterised in that** said first part (61) comprises horizontal shaped flaps (66) of sheared metal sheet, projecting from the upper and lower end of a vertical plane (67) which connects said wings (63).

6. The set of metal elements according to claim 2, 4 or 5 , in which the tubular upright (3) has a polygonal cross-section, **characterised in that** the joint (6) also comprises a shaped element (67) positioned inside the upright (3) and bent in such a way as to remain firmly in position, said first coupling means (7) being positioned at a vertical edge of the upright (3) and exercising a clamping action between the shaped element (67) and the remaining part of the joint (6) that comprises said wings (63).

7. The set of metal elements according to claim 2, 4, 5 or 6, **characterised in that** the wings (63) are at right angles to each other.

8. The set of metal elements according to claim 2, 4, 5, 6 or 7, **characterised in that** each crossbeam (5) comprises a vertical band (51) with, at the top and bottom, opposed horizontal bands (52), the free ends of which have corresponding vertical tongues (53), which engage said second coupling means (8).

9. The set of metal elements according to claim 2, 4, 5, 6 or 7, **characterised in that** each crossbeam (5) comprises a vertical band (51) with, at the top and bottom, opposed horizontal bands (52), the free ends of which have corresponding first vertical stiffening tongues (53) which extend towards the interior of the crossbeam (5) by means of respective horizontal sections (55) and connect corresponding second vertical tongues (54) parallel to and internal with respect to the first ones, said second coupling means (8) being engaged at said second vertical tongues (54), with free access to said second coupling means (8) being guaranteed by corresponding holes (10) in the corresponding first vertical tongues (53), at each end of the crossbeam (5) to be coupled to the corresponding upright (3).

10. The set of metal elements according to claim 8 , **characterised in that** each joint (6) has a body (68) comprising a surface (69) at an angle to and between said wings (63), each crossbeam (5) having, at its ends, a pair of recesses (56) cut in the vertical tongues (53), in order to allow free and precise positioning of the body (68) of the joint (6).

11. The set of metal elements according to claim 9, **characterised in that** each joint (6) has a body (68) comprising a surface (69) at an angle to and between said wings (63), each crossbeam (5) having, at its ends, a pair of recesses (56) cut in the vertical tongues (53), and a pair of sloping shaped portions (57), cut in the horizontal sections (55), in order to allow free and precise positioning of the body (68) of the joint (6).

12. The set of metal elements according to any of the foregoing claims, in which the metal structure (1) is a table (2) whose horizontal surface (4) has peripheral downward-facing vertical walls (41) and at least one horizontal base band (42), there being at least one underlying wooden panel (43) inside said surface (4), **characterised in that** said third coupling means (9) engage the surface (4) at said horizontal band (42) with the uprights (3), which act as legs of the table (2), and an element (44) which protects the lower surface of the wooden panel (43) is also engaged.

13. The set of metal elements according to any of the foregoing claims, **characterised in that** each of said first, second and third coupling means (7, 8 and 9) simply comprise at least one threaded bushing (11) on one side and corresponding screw means (12) which can be engaged in at least one corresponding hole (13), on the other side.

14. The set of metal elements according to claim 12 , **characterised in that** said table (2) comprises at least one shelf (21), beneath the horizontal surface (4) and having respective peripheral vertical walls (211), with "L"-shaped corners, for firm coupling with the uprights (3), the dimensions of all the component elements of the table (2), of the vertical walls (41) of the horizontal surface (4) and of the vertical walls (211) of the shelf (21) being such as to allow the storage of at least the wooden panel (43) and the protective element (44) inside the horizontal surface (4) and the storage of at least the uprights (3) with the relative mounted joints (6) and the crossbeams (5) inside said shelf (21), when the table (2) is dismantled.

## Patentansprüche

1. Satz von Metallelementen für den Aufbau von Metallmöbelstrukturen, vom T yp e nthaltend vertikale rohrförmige Ständer (3), um wenigstens eine horizontale Fläche (4) zu tragen, sowie zum Anbringen von seitlichen Querstreben (5), welcher Satz wenigstens ein Verbindungsstück (6) für jeden Ständer (3) enthält, so ausgelegt, dass es geometrisch zuerst mit dem Ständer und dann mit wenigstens einem entsprechenden und passrechten Profil (58) verbunden wird, das in wenigstens ein Ende von einer der Querstreben (5) eingearbeitet ist, so dass zunächst das Verbindungsstück (6) und der Ständer (3) und dann das Verbindungsstück (6) und die Querstrebe (5) korrekt miteinander verbunden und vorbereitend im Verhältnis zueinander positioniert werden können, wobei wenigstens erste Mittel (7) zur stabilen Befestigung zwischen dem Verbindungsstück 6 und dem Ständer (3) vorhanden sind, sowie zweite Mittel (8) zur stabilen Befestigung zwischen dem Verbindungsstück (6) und einer jeden, diesem zugeordneten Querstrebe (5); **dadurch gekennzeichnet, dass** das Verbindungsstück (6) wenigstens ein Blechteil (64) enthält, das so geformt und gebogen ist, dass es wenigstens ein erstes Teil (61) darstellt, das wenigstens teilweise passrecht zu dem Abschnitt seines Ständers (3) ist; wobei dritte Mittel (9) z ur stabilen Befestigung z wischen einer jeden Q uerstrebe (5) und der horizontalen Fläche (4) vorgesehen sind, und wobei alle diese Befestigungsmittel (7, 8, 9) leicht zugänglich, aber von aussen verborgen sind.

2. Satz von Metallelementen nach Patentanspruch 1, **dadurch gekennzeichnet, dass** das Verbindungsstück (6) wenigstens zwei Flügel (63) enthält, die winkelmässig voneinander abstehend sind, und von denen jeder durch die zweiten Befestigungsmittel (8) mit den Querstreben (5) gegriffen werden kann.

3. Satz von Metallelementen nach Patentanspruch 1, **dadurch gekennzeichnet, dass** wenigstens die Ständer (3), die horizontale Fläche (4) und jede Querstrebe (5) aus geformten und gebogenen Blechteilen hergestellt sind.

4. Satz von Metallelementen nach Patentanspruch 1, **dadurch gekennzeichnet, dass** das Verbindungsstück (6) wenigstens zwei überlappende und fest miteinander verbundene Blechteile (64 und 65) enthält, ein inneres (64) und ein äusseres (65) und im wesentlichen zur Versteifung dienend, beide auf solche Weise geformt und gebogen, dass ein erstes Teil (61) gebildet ist, welches wenigstens teilweise dem Abschnitt seines Ständers (3) angepasst ist, und ein zweites Teil (62), welches wenigstens zwei Flügel (63) beschreibt, die winkelmässig voneinander abstehen, und von welchen jeder durch die zweiten Befestigungsmittel (8) mit den Querstreben (5) gegriffen werden kann.

5. Satz von Metallelementen nach Patentanspruch 2 oder 4, **dadurch gekennzeichnet, dass** das genannte erste Teil (61) horizontale geformte Ansätze (66) aus gestanztem Blech enthält, die sich von dem oberen und dem unteren Ende einer vertikalen Ebene (67) aus erstrecken, welche die genannten Flügel (63) miteinander verbindet.

6. Satz von Metallelementen nach Patentanspruch 2, 4 oder 5, von welchem der rohrförmige Ständer (3) einen mehreckigen Querschnitt hat, **dadurch gekennzeichnet, dass** das Verbindungsstück (6) ebenfalls ein geformtes Element (67) enthält, angeordnet im Inneren des Ständers (3) und auf solche Weise gebogen, dass es fest in seiner Position bleibt, wobei die genannten ersten Befestigungsmittel (7) an einer vertikalen Ecke des Ständers (3) positioniert sind und eine Klemmwirkung zwischen dem geformten Element (67) und dem verbleibenden Teil des Verbindungsstückes (6) ausüben, welches die genannten Flügel (63) enthält.

7. Satz von Metallelementen nach Patentanspruch 2, 4, 5 oder 6, **dadurch gekennzeichnet, dass** die Flügel (63) in rechten Winkeln zueinander stehen.

8. Satz von Metallelementen nach Patentanspruch 2, 4, 5, 6 oder 7, **dadurch gekennzeichnet, dass** jede Querstrebe (5) ein vertikales Band (51) enthält, versehen oben und unten mit sich gegenüberliegenden horizontalen Bändern (52), deren freie Kanten entsprechende vertikale Zungen (53) aufweisen, in welche die genannten zweiten Befestigungsmittel (8) greifen.

9. Satz von Metallelementen nach Patentanspruch 2, 4, 5, 6 oder 7, **dadurch gekennzeichnet, dass** jede Querstrebe (5) ein vertikales Band (51) enthält, versehen oben und unten mit sich gegenüberliegenden horizontalen Bändern (52), deren freie Kanten entsprechende erste vertikale Versteifungszungen (53) aufweisen, welche sich mit Hilfe von jeweiligen horizontalen Abschnitten (55) zum Inneren der Querstrebe (5) hin erstrecken und entsprechende zweite vertikale Zungen (54) verbinden, parallel und innenliegend im Verhältnis zu den ersten, wobei die genannten zweiten Befestigungsmittel (8) in die genannten zweiten vertikalen Zungen (54) greifen, wobei der freie Zugang zu den genannten zweiten Befestigungsmitteln (8) gewährleistet ist durch entsprechende Bohrungen (10) in den entsprechenden ersten vertikalen Zungen (53), und zwar an jedem Ende der an dem entsprechenden Ständer (3) zu befestigenden Querstrebe (5).

10. Satz von Metallelementen nach Patentanspruch 8, **dadurch gekennzeichnet, dass** jedes Verbindungsstück (6) einen Körper (68) hat, enthaltend eine Fläche (69), die angewinkelt ist und zwischen den genannten Flügeln (63) liegt, wobei jede Querstrebe (5) an ihren Enden ein Paar von in die vertikalen Zungen (53) geschnittenen Aussparungen (56) aufweist, um eine freie und präzise Positionierung des Körpers (68) des Verbindungsstückes (6) zu erlauben.

11. Satz von Metallelementen nach Patentanspruch 9, **dadurch gekennzeichnet, dass** jedes Verbindungsstück (6) einen Körper (68) hat, enthaltend eine Fläche (69), die angewinkelt ist und zwischen den genannten Flügeln (63) liegt, wobei jede Querstrebe (5) an ihren Enden ein Paar von in die vertikalen Zungen (53) geschnittenen Aussparungen (56) aufweist, sowie ein Paar von schräg geformten Profilen (57), eingearbeitet in die horizontalen Abschnitte (55), um eine freie und präzise Positionierung des Körpers (68) des Verbindungsstückes (6) zu erlauben.

12. Satz von Metallelementen nach einem beliebigen der vorstehenden Patentansprüche, bei welchem die Metallstruktur (1) ein Tisch (2) ist, dessen horizontale Fläche (4) umlaufende und nach unten gerichtete vertikale Wände (41) hat und wenigstens ein horizontales Basisband (42), wobei wenigstens eine darunter liegende Holzplatte (43) auf der Innenseite der genannten Fläche (4) vorhanden ist, **dadurch gekennzeichnet, dass** die genannten dritten Befestigungsmittel ( 9) in die F läche (4) an dem g enannten horizontalen Band (42) mit den Ständern (3) greifen, welche als Beine des Tisches (2) fungieren, und dass ebenfalls eine Element (44) befestigt wird, welches die untere Oberfläche der Holzplatte (43) schützt.

13. Satz von Metallelementen nach einem beliebigen der vorstehenden Patentansprüche, **dadurch gekennzeichnet, dass** jedes der genannten ersten, zweiten und dritten Befestigungsmittel (7, 8 und 9) einfach wenigstens eine Gewindebuchse (11) auf einer Seite und entsprechende Schraubmittel (12), welche in wenigstens eine entsprechende Bohrung (13) greifen, auf der anderen Seite enthält.

14. Satz von Metallelementen nach Patentanspruch 12, **dadurch gekennzeichnet, dass** der genannte Tisch (2) wenigstens eine Platte (21) unterhalb der horizontalen Fläche (4) enthält und jeweilige umlaufende vertikale Wände (211) mit L-förmig geformten Ecken aufweist, um fest mit den Ständern (3) verbunden zu werden, wobei die Abmessungen aller Elemente des Tisches (2), der vertikalen Wände (41) der horizontalen Fläche (4) und der vertikalen Wände (211) der Platte (21) solche sind, dass sie das Lagern von wenigstens der Holzplatte (43) und des Schutzelementes (44) im Inneren der horizontalen Fläche (4) und das Lagern von wenigstens den Ständern (3) mit den entsprechend montierten Verbindungsstücken (6) und den Querstreben (5) im Inneren der genannten Platte (21) erlauben, wenn der Tisch (2) abgebaut ist.

## Revendications

1. Ensemble d'éléments métalliques pour la construction de structures de meubles métalliques, du type comprenant des montants tubulaires verticaux (3) pour supporter au moins une surface horizontale (4) et pour connecter des traverses latérales (5), dans lequel est comprise au moins une jointure (6) pour chaque montant (3), conformée de manière à s'accoupler géométriquement tout d'abord avec le montant et puis avec au moins une découpe correspondante et complémentaire (58) formée dans au moins une extrémité de l'une des traverses (5), de manière à ce que d'abord la jointure (6) et le montant (3) et ensuite la jointure (6) et la traverse (5) soint correctement assemblés et positionnés préliminairement entre eux, étant présents au moins des premiers moyens (7) d'accouplement ferme entre la jointure (6) et le montant (3), des seconds moyens (8) d'accouplement ferme entre la jointure (6) et chaque traverse (5) qui lui est associée;
**caractérisé en ce que** la jointure (6) comprend au moins une pièce de tôle (64) conformée et p liée de manière à présenter une première p artie (61) qui épouse partiellement la section de son montant (3); de troisièmes moyens (9) d'accouplement ferme entre chaque traverse (5) et la surface horizontale (4) étant prévus, tous ces moyens d'accouplement (7, 8, 9) étant facilement accessibles, mais cachés de l'extérieur.

2. Ensemble d'éléments métalliques selon la revendication 1, **caractérisé en ce que** la jointure (6) comprend au moins deux ailettes (63) angulairement distancées l'une de l'autre, chacune desquelles peut etre engagée par les seconds moyens d'accouplement (8) avec les traverses (5).

3. Ensemble d'éléments métalliques selon la revendication 1, **caractérisé en ce qu'**au moins les montants (3), la surface horizontale (4) et chacune des traverses (5) sont réalisés à partir de parties de tôles de métal conformées et pliées.

4. Ensemble d'éléments métalliques selon la revendication 1, **caractérisé en ce que** la jointure (6) comprend au moins deux pièces de tôle (64 et 65) superposées et fermement accouplées entre elles, une pièce interne (64) et une pièce externe (65) substantiellement de rigidification, toutes deux conformées et pliées de manière à présenter une première partie (61) qui correspond au moins partiellement à la section de son montant (3) et une seconde partie (62) définissant au moins deux ailettes (63) angulairement distancées entre elles, chacune desquelles peut être engagée par les seconds moyens d'accouplement (8) avec les traverses (5).

5. Ensemble d'éléments métalliques selon la revendication 2 ou 4, **caractérisé en ce que** ladite première partie (61) comprend des rabats (66) horizontaux conformés de tôle tranchée, saillants des extrémités supérieures et inférieures d'un plan vertical (67) qui connecte lesdites ailettes (63).

6. Ensemble d'éléments métalliques selon la revendication 2, 4 ou 5, dans lequel le montant tubulaire (3) présente une section transversale polygonale, **caractérisé en ce que** la jointure (6) comprend en outre un élément conformé (67) positionné à l'intérieur du montant (3) et plié de manière à rester fermement en position, lesdits premiers moyens d'accouplement (7) étant positionnés sur un bord vertical du montant (3) et exerçant une action de pincement entre l'élément conformé (67) et la partie restante de la jointure (6) qui comprend lesdites ailettes (63).

7. Ensemble d'éléments métalliques selon la revendication 2, 4, 5 ou 6, **caractérisé en ce que** les ailettes (63) sont disposées à angle droit entre elles.

8. Ensemble d'éléments métalliques selon la revendication 2, 4, 5, 6 ou 7, **caractérisé en ce que** chaque traverse (5) comprend une bande verticale (51) avec, sur le sommet et la base, des bandes horizontales opposées (52), les extrémités libres desquelles présentent des languettes verticales correspondantes (53), qui engagent lesdits seconds moyens d'accouplement (8).

9. Ensemble d'éléments métalliques selon la revendication 2, 4, 5, 6 ou 7, **caractérisé en ce que** chaque traverse (5) comprend une bande verticale (51) avec, sur le sommet et la base, des bandes verticales opposées (52), les extrémités libres desquelles présentent de correspondantes premières languettes verticales de rigidification (53) qui s'étendent vers l'intérieur de la traverse (5) au moyen de respectives sections horizontales (55) et connectent les correspondantes secondes languettes verticales (54) parallèles et internes par rapport aux premières, lesdits seconds moyens d'accouplement (8) étant engagés sur lesdites secondes languettes verticales (54), avec un accès libre audits seconds moyens d'accouplement (8) étant garanti par des orifices correspondants (10) dans les correspondantes premières languettes verticales (53), sur chaque extrémité de la traverse (5) à accoupler au montant (3) correspondant.

10. Ensemble d'éléments métalliques selon la revendication 8, **caractérisé en ce que** chaque jointure (6) présente un corps (68) comprenant une surface (69) angulée et entre lesdites ailettes (63), chaque traverse (5) ayant, sur ses extrémités, une paire de renfoncements (56) découpés dans les languettes verticales (53), de manière à permettre le positionnement libre et précis du corps (68) de la jointure (6).

11. Ensemble d'éléments métalliques selon la revendication 9, **caractérisé en ce que** chaque jointure (6) présente un corps (68) comprenant une surface (69) angulée et entre lesdites ailettes (63), chaque traverse (5) ayant, sur ses extrémités, une paire de renfoncements (56) découpés dans les languettes verticales (53), et une paire de portions conformées inclinées (57), découpées dans les sections horizontales (55), de manière à permettre le positionnement libre et précis du corps (68) de la jointure (6).

12. Ensemble d'éléments métalliques selon n'importe laquelle des revendications précédentes, dans lequel la structure métallique (1) est un plan (2) dont la surface horizontale (4) présente des parois verticales périphériques orientées vers le bas (41) et au moins une bande de base horizontale (42), au moins un panneau en bois situé au-dessous (43) existant à l'intérieur de ladite surface (4), **caractérisé en ce que** lesdits troisièmes moyens d'accouplement (9) engagent la surface (4) sur ladite bande horizontale (42) avec les montants (3) qui agissent comme des jambes pour le plan (2), et un élément (44) qui protège la surface inférieure du panneau en bois (43) est également engagé.

13. Ensemble d'éléments métalliques selon n'importe laquelle des revendications précédentes, **caractérisé en ce que** chacun desdits premiers, seconds et troisièmes moyens d'accouplement (7, 8 et 9) comprennent simplement au moins une bague taraudée (11) sur un côté des moyens de vissage correspondants (12) qui peuvent être engagés dans au moins un orifice correspondant (13), sur l'autre côté.

14. Ensemble d'éléments métalliques selon la revendication 12, **caractérisé en ce que** ledit plan (2) comprend au moins une étagère (21), au-dessous de la surface horizontale (4) et ayant de respectives parois verticales périphériques (211), avec des coins en forme de L, pour un accouplement ferme avec les montants (3), les dimensions de tous les éléments composant le plan (2), des parois verticales (41) de la surface horizontale (4) et des parois verticales (211) de l'étagère (21) étant telles qu'elles puissent permettre le stockage d'au moins le panneau en bois (43) et l'élément protectif (44) à l'intérieur de la surface horizontale (4) et le stockage d'au moins les montants (3) avec les relatives jointures montées (6) et les traverses (5) à l'intérieur de ladite étagère (21), lorsque le plan est démonté.
